# EUROPÄISCHE PATENTSCHRIFT

(11) **EP 0 427 794 B1**
(45) Veröffentlichungstag und Bekanntmachung des Hinweises auf die Patenterteilung: **09.06.1993**
(21) Anmeldenummer: 89911768.3
(22) Anmeldetag: 25.10.1989
(51) Int. Cl.: G01L 1/22, G01L 9/04

(54) **VORRICHTUNG ZUR MESSUNG EINER MECHANISCHEN VERFORMUNG**
DEVICE FOR MEASURING MECHANICAL DEFORMATION
DISPOSITIF DE MESURE DE DEFORMATIONS MECANIQUES

(30) Priorität: 17.03.1989 DE 3908795
(43) Veröffentlichungstag der Anmeldung: 22.05.1991
(73) Patentinhaber: ROBERT BOSCH GMBH, 70442 Stuttgart (DE)
(72) Erfinder: KUHNT, Winfried, D-7000 Stuttgart 10 (DE)
(86) Internationale Anmeldenummer: DE8900684
(87) Internationale Veröffentlichungsnummer: WO9011500

(56) Entgegenhaltungen:
- EP-A- 0 273 103
- DE-A- 3 612 810
- DE-C- 2 913 680
- GB-A- 1 282 776
- GB-A- 2 156 087
- GB-A- 2 201 791
- US-A- 3 841 150
- US-A- 4 337 665
- US-A- 4 480 478
- Patent Abstracts of Japan, vol. 9, No. 13, P-328, abstract from JP-59 162431 publ. 13.09.84

## Beschreibung

Die Erfindung geht aus von einer Vorrichtung nach der Gattung des Anspruchs 1.

Aus der DE-OS 36 12 810 ist eine Vorrichtung zur Messung einer mechanischen Verformung, insbesondere unter Einwirkung eines Druckes bekannt, bei der das Ausgangssignal eines Dickschichtwiderstands-Drucksensors mittels einer geeigneten Schaltungsanordnung ausgewertet wird. Dabei sind die Dickschichtwiderstände, die die eigentliche Sensoranordnung bilden, in einer Brückenschaltung angeordnet, wobei diese Brückenschaltung auf einer durch Druckeinwirkung elastisch verformbaren Unterlage befestigt ist. Durch Druckeinwirkung werden zwei der Brückenwiderstände gestaucht und zwei in ihrer Länge gedehnt, so daß die Brücke verstimmt wird und an der Brückendiagonale das Meßsignal abgenommen werden kann.

Da sowohl die Schaltungsanordnung selbst als auch der Dickschichtwiderstands-Drucksensor mit Temperaturfehlern behaftet sind, ist eine Temperaturkompensation vorgesehen, die den linearen und den quadratischen Anteil des Temperaturgangs kompensiert und außerdem den Temperaturgang der Meßempfindlichkeit mittels eines temperaturabhängigen Widerstandes kompensiert.

Für viele Anwendungen ist diese Auswertung des Ausgangssignals eines Drucksensors jedoch noch nicht genau genug, außerdem führen Störsignale, die z. B. durch Rauschen oder Driften verursacht werden, zu weiteren unerwünschten Ungenauigkeiten.

Aus der DE-C-29 13 680 ist eine Schaltung zur Kontrolle des Ladegewichtes von Kraftfahrzeugen bekannt, die zwei voneinander unabhängige Sensorelemente mit je vier als Brücke geschaltete Dehnungsmeßstreifen enthält, deren Ausgangssignale je einem Operationsverstärker zugeführt werden.

Eine weitere Auswerteschaltung für einen Drucksensor ist aus der US-PS 3 841 150 bekannt. Dabei besteht der Sensor lediglich aus zwei druckabhängigen Widerständen, die von einem mit Hilfe von Operationsverstärkern erzeugten konstanten Strom durchflossen werden. Wenn sich die Widerstandswerte infolge des zu messenden Druckes unterschiedlich verändern, entsteht in einem angeschlossenen Differenzverstärker, der die Differenz der an den beiden Widerständen abfallenden Spannung verstärkt, eine Meßspannung, die in einer nachfolgenden Auswerteschaltung ausgewertet wird.

Da lediglich zwei druckabhängige Widerstände vorgesehen sind und keine Brückenschaltung von temperaturabhängigen Widerständen, ist eine aufwendige Auswerteschaltung erforderlich, mit deren Hilfe eine Linearisierung des Meßsignales durch Rückkopplung eines Teiles des Meßsignales auf die Meßwiderstände erhalten wird.

Aus der GB-A 1 282 776 ist eine Anordnung zur Druckmessung bekannt, bei der druckabhängige Widerstände in einer Wheatstone-Brücke verschaltet sind, deren druckabhängige Brückenspannung in einem nachfolgenden Differenzverstärker verstärkt wird. Durch Rückkopplung des Ausgangssignales des Differenzverstärkers auf die Versorgungsdiagonale der Wheatstonschen Brücke wird eine Linearisierung des Ausgangssignales erhalten.

Diese bekannte Anordnung zur Druckmessung hat keine Temperaturkompensation und keine Offsetkorrektur, so daß die Druckmessung für viele Anwendungen zu ungenau ist.

Die erfindungsgemäße Vorrichtung mit den Merkmalen der Ansprüche hat gegenüber den aus dem Stand der Technik bekannten Vorrichtungen und Schaltungsanordnungen den Vorteil, daß neben einer Temperaturkompensation und einer Offset-Korrektur auch noch eine Linearisierung des Sensorausgangssignales durchgeführt wird, wodurch eine noch genauere Auswertung des Sensorausgangssignales ermöglicht wird und das Nutzsignal gegenüber den Störungen weiter hervorgehoben wird.

Die Linearisierung wird dadurch erreicht, daß auf die Speisediagonale des Sensors, der in einer besonders vorteilhaften Ausgestaltung der erfindungsgemäßen Vorrichtung aus zwei gleichartigen Sensorelementen besteht, deren jeweilige Ausgangssignale zu einem gesamten Ausgangssignal addiert werden, ein Teil des Ausgangssignales rückgekoppelt wird.

Da alle Komponenten des Sensors in einem Dickschicht-Fertigungsverfahren integriert hergestellt werden können und der Platzbedarf der gesamten Auswerteschaltung nicht größer ist als bei bisher, beispielsweise aus der DE-OS 36 12 810, bekannten Einrichtungen, ist der Mehraufwand zur Erzielung der höheren Genauigkeit nur sehr gering.

Durch die in den abhängigen Ansprüchen aufgeführten Maßnahmen sind vorteilhafte Weiterbildungen und Verbesserungen der in Anspruch 1 angegebenen Vorrichtung angegeben.

Ein Ausführungsbeispiel der Erfindung ist in der Zeichnung dargestellt und in der nachfolgenden Beschreibung näher erläutert. Dabei zeigt Figur 1 eine schaltungsmäßige Ausgestaltung des Ausführungsbeispiels, Figur 2 zeigt zwei Spannungsverläufe ohne druckabhängige Rückkopplung und Figur 3 zeigt zwei Spannungsverläufe mit druckabhängiger Rückkopplung.

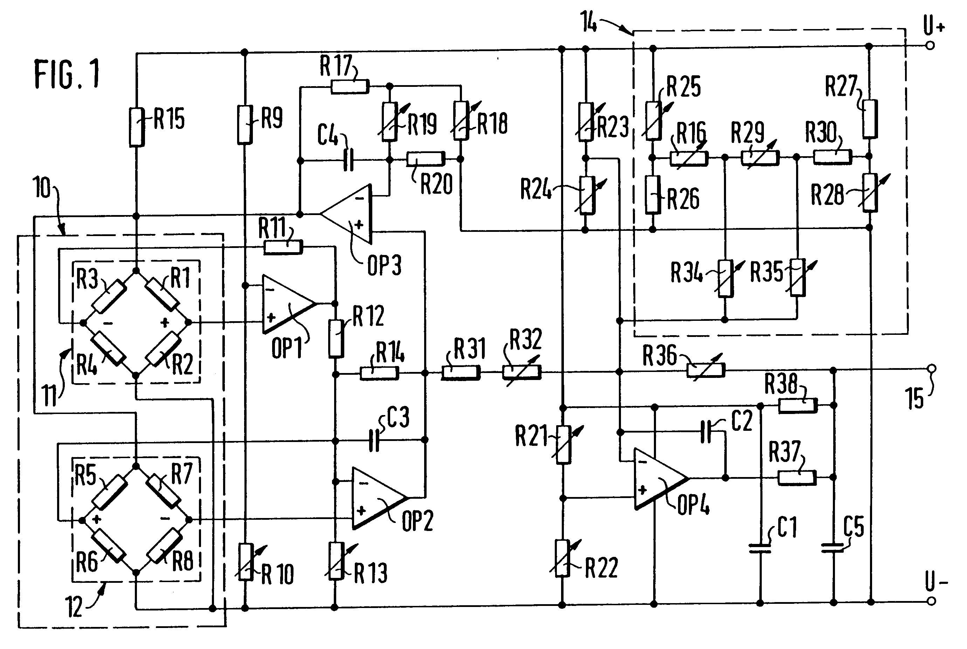

In Figur 1 ist eine Schaltungsanordnung dargestellt, die zwischen einer mit U+ bezeichneten Versorgungsspannungsleitung und einer mit U- bezeichneten und mit Masse verbundenen Versorgungsspannungsleitung betrieben wird.

Dabei sind zwei Widerstands-Brückenschaltungen mit ihren Versorgungsdiagonalen über den Ausgang eines Operationsverstärkers OP3 und einen Pull-up-Widerstand R15 derart zwischen die Versorgungsspannungsleitungen U+, U- geschaltet, daß der Verbindungspunkt zwischen den Widerständen R1 und R3 bzw. R5 und R7 vom Ausgang des OP3 und über R15 von U+ gespeist wird und der Verbindungspunkt zwischen R2 und R4 bzw. R6 und R8 direkt an U- angeschlossen ist. Die Widerstands-Brückenschaltung R1 bis R4 bildet das erste Sensorelement 11, die Widerstands-Brückenschaltung R5 bis R8 das zweite Sensorelement 12, insgesamt setzt sich der Drucksensor 10 aus diesen beiden Brückenschaltungen bzw. Sensorelementen 11 und 12 zusammen.

Die anderen diagonalen Anschlüsse des Sensorelements 11 sind mit einem Operationsverstärker OP1 verbunden, dabei ist der Verbindungspunkt zwischen den Widerständen R1 und R2 mit dem nichtinvertierenden Eingang des Operationsverstärkers 1 verbunden und der Verbindungspunkt zwischen den Widerständen R3 und R4 ist direkt mit dem invertierenden Eingang des Operationsverstärkers OP1 verbunden und über einen Rückkopplungswiderstand R11 mit dem Ausgang des Operationsverstärkers OP1 und über einen Widerstand R9 mit der positiven Versorgungsspannungsleitung U+.

Das Sensorelement 12 ist mit einem Operationsverstärker OP2 verbunden, dabei ist der Verbindungspunkt zwischen den Widerständen R7 und R8 mit dem nichtinvertierenden Eingang des Operationsverstärkers OP2 verbunden und der Verbindungspunkt zwischen den Widerständen R5 und R6 ist mit dem invertierenden Eingang des Operationsverstärkers OP2 verbunden und über einen Kondensator C3 mit dem Ausgang des Operationsverstärkers OP2.

Der invertierende Eingang des Operationsverstärkers OP1 ist außerdem über einen veränderbaren Widerstand R10 mit Masse verbunden und der invertierende Eingang des Operationsverstärkers OP2 ist über einen veränderbaren Widerstand R13 ebenfalls mit Masse verbunden. Weiterhin ist der Ausgang des Operationsverstärkers OP1 über einen Widerstand R12 mit dem invertierenden Eingang des Operationsverstärkers OP2 verbunden und über einen weiteren Widerstand R14, der an R12 angeschlossen ist, an den Ausgang des Operationsverstärkers OP2 angeschlossen.

Dieser Teil der Schaltung mit den Widerständen R9 bis R14, den Operationsverstärkern OP1 und OP2 sowie dem Kondensator C3 dient als Vorverstärkerstufe für die Brückenausgangsspannung der beiden Sensorelemente 11 und 12. Darüber hinaus wird in diesem Teil der Schaltung eine grobe Offset-Korrektur durchgeführt.

Der Ausgang des Operationsverstärkers OP2 ist mit dem nichtinvertierenden Eingang eines weiteren Operationsverstärkers OP3 verbunden, dessen Ausgang mit der Speisediagonale der beiden Sensorelemente 11 und 12 und über den Widerstand R15 mit der positiven Versorgungsspannungsleitung U+ verbunden. Zwischen dem Ausgang des Operationsverstärkers OP3 und seinen invertierenden Eingang ist ein Kondensator C4 geschaltet, parallel zum Kondensator C4 liegt eine Reihenschaltung eines Widerstandes R17 und eines veränderbaren Widerstandes R19. Des weiteren ist der Verbindungspunkt des Widerstanddes R17 mit dem veränderbaren Widerstand R19 über einen veränderbaren Widerstand R18 mit Masse verbunden. Außerdem ist der invertierende Eingang des Operationsverstärkers OP3 über einen Widerstand R20 mit Masse verbunden.

Dieser Teil der Schaltung dient zur Erzeugung eines Rückkopplungssignals aus dem Ausgangssignal des Operationsverstärkers OP2, das auf die Speisediagonalen der beiden Sensorelemente 11 und 12 rückgekoppelt wird. Der Ausgang des Operationsverstärkers OP2 ist weiterhin über eine Serienschaltung von Widerständen R31 und R32 mit dem invertierenden Eingang eines weiteren Operationsverstärkers OP4 verbunden, wobei der Widerstand R32 veränderbar ist und zusammen mit dem Widerstand R31 zur Temperaturkompensation der Empfindlichkeit dient.

Der nichtinvertierende Eingang des Operationsverstärkers OP4 ist mit dem Verbindungspunkt zwischen zwei Widerständen R21 und R22, die zwischen U+ und U- geschaltet sind und zur Offset-Korrektur des Operationsverstärkers OP4 dienen, verbunden.

Der invertierende Eingang des Operationsverstärkers OP4 ist mit dem Verbindungspunkt zwischen zwei Widerständen R23 und R24, die zwischen U+ und U- geschaltet sind und zum Feinabgleich des Offset dienen, geschaltet.

Ein weiteres Widerstandsnetzwerk 14, bestehend aus den Widerständen R16, R25 bis R30, R34 und R35 wird zur linearen und quadratischen Temperaturkompensation des Offsets der Sensorkennlinie verwendet und ist zwischen U+ und U- geschaltet und durch die Widerstände R34 und R35 mit dem invertierenden Eingang des Operationsverstärkers OP4 verbunden.

Die von U+ abgewandte Seite der beiden Serienschaltungen des veränderbaren Widerstandes R25 und des Widerstandes R26 bzw. des Widerstandes R27 und des veränderbaren Widerstandes R28 sind mit U- verbunden, während die Verbindungspunkte der Serienschaltungen R25, R26 und R27, R28 über eine weitere Serienschaltung zweier veränderbarer Widerstände R16, R29 und eines Widerstandes R30 miteinander verbunden sind. Dabei ist der Verbindungspunkt zwischen R16 und R29 über den Widerstand R34 und der Verbindungspunkt zwischen R29 und R30 über den Widerstand R35 auch noch an den invertierenden Eingang des Operationsverstärkers OP4 angeschlossen.

Im Ausführungsbeispiel nach Figur 1 sind die Widerstände R17, R20, R26, R27, R30, R31 als NTC-Widerstände ausgebildet, während die Widerstände R16, R25, R28, R29 PTC-Widerstände sind.

Der Ausgang des Operationsverstärkers OP4 ist über einen Widerstand 37 mit der Ausgangsklemme 15, an der das kompensierte Drucksignal erscheint, verbunden. Die Ausgangsklemme 15 ist über einen Widerstand R36 mit dem invertierenden Eingang des Operationsverstärkers OP4 verbunden und über einen Glättungskondensator C2 mit dem Ausgang des Operationsverstärkers OP4. Ein weiterer Widerstand R38 ist zwischen U+ und der Ausgangsklemme 15 geschaltet, wobei zwischen der Ausgangklemme 15 und U- ein weiterer Glättungskondensator C5 und zwischen U+ und U- ein Kondensator C1 liegt.

Die Brückenspannungen der beiden aus R1 bis R4 und R5 bis R8 bestehenden Sensorelementen 11 und 12 werden in den beiden Operationsverstärkern OP1 und OP2, die jeweils als Differenzverstärker geschaltet sind, verstärkt und addiert. Am Ausgang des Operationsverstärkers 2 ergibt sich eine mit zunehmender Brückenspannung proportional fallende Signalspannung, der ein durch das Widerstandsverhältnis R14/R12 x R11/R9 gegebener Gleichspannungsteil durch die Versorgungsspannung der Schaltung überlagert wird, durch den der Arbeitspunkt des Operationsverstärkers OP2 festgelegt ist. Während das Nutzsignal somit zur Hälfte von Brücke 1 und zur Hälfte von Brücke 2 kommt, gehen auftretende Störgrößen, die von den statistisch unabhängigen Brückenspannungen herrühren, nur mit den statistischen Verhältnis √2̅/̅2̅ ins Gesamtsignal ein.

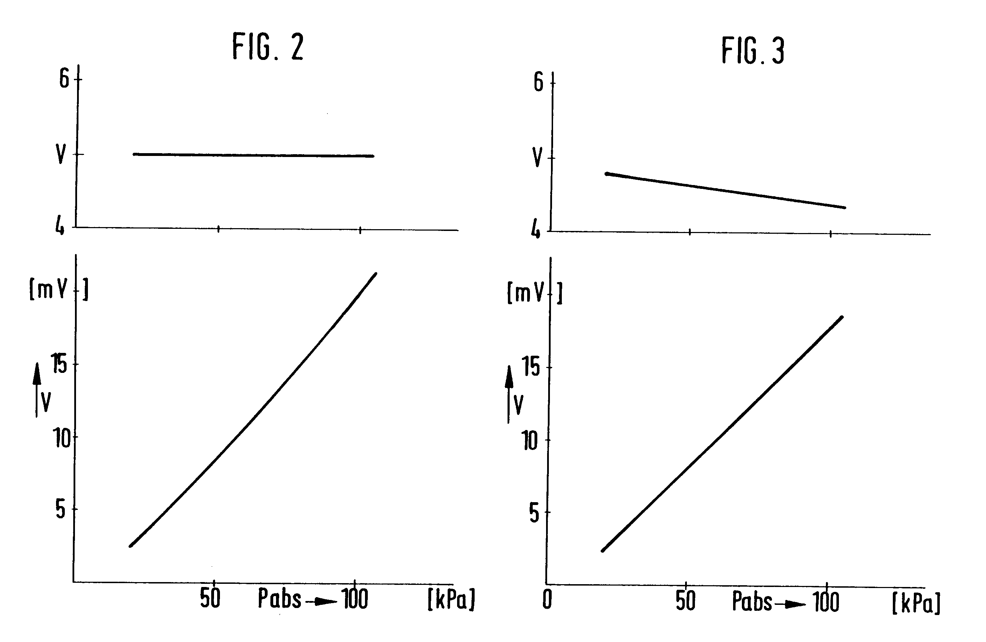

Bei konstanter Spannung an den Speisediagonalen der beiden Brücken, d.h. ohne Rückkopplung des Ausgangssignales, ergeben sich in Abhängigkeit vom Druck nichtlinear ansteigende Brückenspannungen, deren Verlauf sich aus Figur 2 entnehmen läßt. Dabei ist im oberen Teil der Figur 2 die konstante Spannung an den Speisediagonalen der Brücke dargestellt und im unteren Teil der Figur 2 der Verlauf der zugehörigen Brückenspannungen in Abhängigkeit vom Druck.

Bei Rückkopplung des Ausgangssignales auf die Speisespannung der Brückendiagonalen liegen am Ausgang des Operationsverstärkers OP3, der als nichtinvertierenden Verstärker geschaltet ist, ein dem Arbeitspunkt des Operationsverstärkers OP2 proportionaler Anteil und ein dem fallenden Drucksignal proportionaler Anteil an, der, rückgekoppelt auf die Speisediagonale der Widerstandsbrücken bei größer werdender Brückenspannung eine Abnahme der Spannung in der Speisediagonale der Brücke und somit eine Abnahme der Empfindlichkeit der Brückenspannung auf das Meßsignal bewirkt. Figur 3 gibt im unteren Teil den Verlauf der Brückenspannung bei druckabhängiger Rückkopplung auf die Speisediagonale der Brücke wieder, während im oberen Teil von Figur 3 die Spannung an der Speisediagonale aufgetragen ist, wobei beide Spannungen in Abhängigkeit vom Druck aufgetragen sind.

Besagte Rückkopplung hätte bei einem ideal linearen Sensorelement einen mit zunehmenden Meßsignal flacher werdenden Kennlinienverlauf der Brückenspannung der Spannung am Operationsverstärker OP2 zur Folge. Da jedoch bei dem Dickschicht-Sensorelement eine dem linearen Verlauf der Kennlinie überlagerte annähernd quadratische Krümmung bei konstanter Speisespannung in der Brückendiagonale entsteht, bewirkt die meßsignalabhängige Rückkopplung auf die Speisespannung in den Brückendiagonalen eine Linearisierung der Brückenspannungen und damit eine Linearisierung des verstärkten Signals am Ausgang des Operationsverstärkers OP2.

In der weiteren Verstärkersstufe des Operationsverstärkers OP4 wird das Drucksignal invertiert und durch die temperaturabhängige Verstärkung, gegeben durch das Verhältnis R36/ (R31 R32), und durch Addition der in der Stufe 14 entstehenden Temperatursignale temperaturkompensiert.

Das Widerstandsnetzwerk 14 erzeugt zwei Temperatursignale, am Abgriff zwischen R16 und R29 ein mit der Temperatur fallendes und am Abgriff zwischen R29 und R30 ein mit der Temperatur ansteigendes Temperatursignal, die beide zusätzlich jeweils einen positiv quadratischen Anteil aufweisen. Die Gewichtung durch die Einstellung der veränderlichen Widerstände R34, R35 wird so vorgenommen, daß sich im Ausgang eine im wesentlichen lineare und temperaturunabhängige Druckkennlinie ergibt.

## Patentansprüche

1. Vorrichtung zur Messung einer mechanischen Verformung, insbesondere unter Einwirkung eines Druckes, mit einem Sensor (10), der unter Einwirkung einer Verformung ein Spannungssignal abgibt, mit einer aus wenigstens zwei Operationsverstärkern (OP1, OP2) bestehenden Schaltungsanordnung, die über einen weiteren Operationsverstärker (OP3) mit dem Eingang des Sensors (10) in Verbindung steht und einer nachfolgenden, wenigstens einen weiteren Operationsverstärker (OP4) und temperaturabhängige Widerstände umfassenden Schaltungsanordnung zur Temperaturkompensation, die ein temperaturabhängiges Signal erzeugt, das dem Ausgangssignal des Sensors (10) überlagert wird, dadurch gekennzeichnet, daß der Sensor (10) aus zwei voneinander unabhängigen Sensorelementen (11, 12), die je vier als Brücke geschaltete Widerstände umfassen, besteht, deren Ausgangssignale je einem Operationsverstärker (OP1, OP2) zugeführt und über den Operationsverstärker (OP3) auf die Versorgungsdiagonale der Sensorelemente (11, 12) rückgekoppelt werden.

2. Vorrichtung nach Anspruch 1, dadurch gekennzeichnet daß die Sensorelemente (11, 12) Dickschichtwiderstände (R1 bis R8) sind.

3. Vorrichtung nach Anspruch 1, dadurch gekennzeichnet, daß das in der Schaltungsanordnung zur Temperaturkompensation gebildete temperaturabhängige Signal aus zwei gewichteten Signalen besteht, welche beide quadratisch von der Temperatur abhängen, wobei die Gewichtung mittels veränderbarer Widerstände (R34, R35) erfolgt.

## Claims

1. Device for measuring a mechanical deformation, in particular under the action of a pressure, having a sensor (10) which transmits a voltage signal under the action of a deformation, having a circuit arrangement consisting of at least two operational amplifiers (OP1, OP2) which is connected to the input of the sensor (10) via a further operational amplifier (OP3), and having a downstream circuit arrangement, comprising at least one further operational amplifier (OP4) and temperature-dependent resistors, for temperature compensation, which generates a temperature-dependent signal which is super-imposed on the output signal of the sensor (10), characterised in that the sensor (10) consists of two mutually independent sensor elements (11, 12) which each comprise four resistors connected as a bridge, the output signals of which are fed to one operational amplifier (OP1, OP2) each and fed back to the supply diagonal of the sensor elements (11, 12) via the operational amplifier (OP3).

2. Device according to Claim 1, characterised in that the sensor elements (11, 12) are thick-film resistors (R1 to R8).

3. Device according to Claim 1, characterised in that the temperature-dependent signal formed in the circuit arrangement for temperature compensation consists of two weighted signals which both depend quadratically on temperature, the weighting being performed by means of variable resistors (R34, R35).

## Revendications

1. Dispositif pour la mesure d'une déformation mécanique, en particulier sous l'action d'une pression, avec un détecteur (10), qui sous l'effet d'une déformation délivre un signal de tension, avec un circuit se composant d'au moins deux amplificateurs opérationnels (OP1, OP2), circuit qui est en liaison par un autre amplificateur opérationnel (OP3) avec l'entrée du détecteur (10) et un circuit monté en aval comprenant au moins un autre amplificateur opérationnel (OP4) et des résistances fonction de la température pour une compensation de température, circuit qui produit un signal fonction de la température, qui est superposé au signal de sortie du détecteur (10), dispositif caractérisé en ce que le détecteur (10) consiste en deux éléments de détecteur (11, 12) indépendant l'un de l'autre, qui comprennent respectivement quatre résistances montées en pont, résistances dont les signaux de sortie sont envoyés respectivement à un amplificateur opérationnel (OP1, OP2) et sont réinjectés par l'amplificateur opérationnel (OP3) sur la diagonale d'alimentation des éléments de détecteur (11, 12).

2. Dispositif selon la revendication 1, caractérisé en ce que les éléments de détecteur (11, 12) sont des résistances à couche épaisse (R1 à R8).

3. Dispositif selon la revendication 1, caractérisé en ce que le signal fonction de la température formé dans le circuit servant à la compensation de température consiste en deux signaux pondérés, la pondération ayant lieu au moyen de résistances variables (R34, R35).
